(19) Europäisches Patentamt

European Patent Office

Office européen des brevets

(11) Veröffentlichungsnummer : **0 068 037 B1**

# (12) EUROPÄISCHE PATENTSCHRIFT

(45) Veröffentlichungstag der Patentschrift :
30.01.85

(21) Anmeldenummer : 81104998.0

(22) Anmeldetag : 27.06.81

(51) Int. Cl.⁴ : **G 02 B 27/14**

(54) **Optischer Strahlteiler.**

none

(43) Veröffentlichungstag der Anmeldung :
**05.01.83 Patentblatt 83/01**

(45) Bekanntmachung des Hinweises auf die Patenterteilung : **30.01.85 Patentblatt 85/05**

(84) Benannte Vertragsstaaten :
**AT BE CH DE FR GB IT LI NL SE**

(56) Entgegenhaltungen :
**DE-A- 2 063 899**
**DE-A- 2 361 626**
**DE-B- 2 006 669**
**DE-B- 2 009 798**
**GB-A- 1 314 007**

(73) Patentinhaber : **DR.-ING. RUDOLF HELL GmbH**
**Grenzstrasse 1-5**
**D-2300 Kiel 14 (DE)**

(72) Erfinder : **Gebhardt, Axel**
**Strandweg 12**
**D-2301 Mönkeberg (DE)**

Jouve, 18, rue St-Denis, 75001 Paris, France

EP 0 068 037 B1

## Beschreibung

Die vorliegende Erfindung betrifft einen optischen Strahlteiler gemäß dem Oberbegriff des Anspruchs 1.

Bei der Bildaufzeichnung mittels Lichtstrahlen werden in zunehmendem Maße Laser als Lichtquellen verwendet. Der Ausgangslichtstrahl des Lasers wird über einen Modulator und eine Abbildungsoptik, die aus einer Blende und einem Objektiv besteht, auf ein Aufzeichnungsmedium gerichtet, wobei eine zeilenweise Ablenkung des Lichtstrahls auf das Aufzeichnungsmedium durch eine geeignete Relativbewegung zwischen dem Ausgangslichtstrahl der Optik und dem Aufzeichnungsmedium erfolgt. Der Modulator steuert dabei die Intensität des Lichtstrahls in Abhängigkeit von einem elektrischen Bildsignal, das aus einer zeilenweisen optisch-elektrischen Bildabtastung gewonnen wird.

Um an Ausgang der Abbildungsoptik und auf dem Aufzeichnungsmedium eine möglichst konstante Intensität des Lichtstrahls zu erhalten, wird zwischen Objektiv und Blende ein Teil des lichts mittels einer im Strahlengang befindlichen Strahlteilerplatte oder eines Strahlteilerwürfels ausgeblendet und auf einen fotoelektrischen Wandler gegeben. Das vom fotoelektrischen Wandler gelieferte elektrische Signal wird auf den Istwerteingang eines Regelverstärkers gegeben, der Sollwerteingang wird mit dem Steuersignal angesteuert und das Ausgangssignal des Regelverstärkers wird auf den Eingang des Modulators gegeben, wodurch ein geschlossener Regelkreis entsteht, durch den die Intensität des Ausgangslichtstrahls der Abbildungsoptik, der auf das Aufzeichnungsmedium trifft, stabilisiert wird. Eine solche Stabilisierungsschaltung ist z. B. in der DE-B-1 271 755 angegeben. Weitere Anordnungen dieser Art, bei denen eine solche Regelung mit einem entsprechenden optischen Stellglied, das sich im Strahlengang der Lichtquelle befindet, sind z. B. in der DE-A 2 063 899 und in der DE-B 2 063 898 beschrieben.

In der Übertragungsstrecke zwischen Lichtleiter und Abbildungsoptik werden häufig Lichtleiter verwendet, die im Falle, daß die Abbildungsoptik zum Zweck der Herbeiführung der Relativbewegung zwischen Ausgangslichtstrahl der Abbildungsoptik und dem Aufzeichnungsmedium bewegt wird, ebenfalls mitbewegt werden. Es ist eine Eigenschaft der Lichtleiter, daß das austretende Licht teilweise depolarisiert wird. Je nach verwendetem Lichtleitertyp bleibt jedoch ein polarisierter Lichtanteil erhalten. Außberdem haben sie die Eigenschaft, daß, wenn sie bewegt werden, am Ausgang eine Drehung der Polarisationsebene des z. B. vom Laser eingespeisten Lichts erfolgt, wodurch zwar die Gesamtintensität sich nicht ändert, aber die Strahlteilerplatte oder der Strahlteilerwürfel liefern einen ausgespiegelten Strahl gemäß den Fresnelschen Formeln, der eine von der Polarisationsrichtung abhängige Intensität hat, da bei einer Platte oder einem Würfel als Strahlteiler die Intensität des ausgeblendeten Strahls von der Polarisationsrichtung des einfallenden Strahls zur Einfallsebene und dem Einfallswinkel abhängt. Die Intensität des Teilstrahls ist also nicht mehr proportional der Intensität des Hauptstrahls, und der Regelkreis wird mit einem Signal gespeist, das nicht der Intensität des auf das Aufzeichnungsmedium auftreffenden Lichtstrahls entspricht. Die Folge ist also ein falscher Regelvorgang, d. h. Schwankungen der Intensität des Ausgangslichtstrahls der Abbildungsoptik. Diese Schwankungen machen sich bei der Bildaufzeichnung als störende Effekte bemerkbar und verschlechtern die Qualität des aufgezeichneten Bildes.

Der vorliegenden Erfindung liegt daher die Aufgabe zugrunde, einen verbesserten optischen Strahlteiler für polarisiertes Licht zu schaffen.

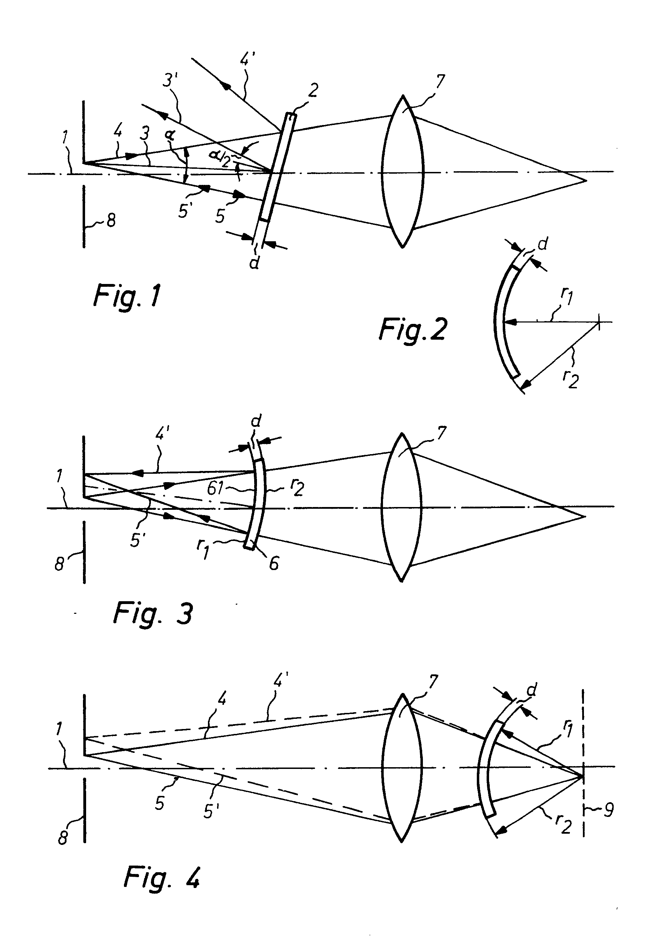

Diese Aufgabe wird durch einen optischen Strahlteiler gemäß Anspruch 1 gelöst. Eine vorteilhafte Weiterbildung der Erfindung ist im Anspruch 2 und Anwendungen eines Strahlenteilers gemäß Anspruch 1 in den Ansprüchen 3 und 4 gekennzeichnet. Die Erfindung wird im folgenden anhand der Figuren 1-5 näher erläutert. Es Zeigen :

Figur 1 eine herkömmliche Strahlteileranordnung (Stand der Technik),
Figur 2 eine Skizze eines prinzipiellen Aufbaus einer Menikuslinse,
Figur 3 eine Strahlteileranordnung mit Meniskuslinse,
Figur 4 eine weitere Ausführungsform der Erfindung und
Figur 5 einen Anwendungsfall für einen Strahlteiler gemäß Figur 2.

In Figur 1 ist eine herkömmliche Strahlteileranordnung mit der optischen Achse 1 dargestellt, bei der in einem Lichtbündel mit dem zentralen Strahl 3 und den Randstrahlen 4 und 5 und mit einem Öffnungswinkel α eine Strahlteilerplatte 2, bestehend aus einer Planplatte der Dicke d unter dem Winkel α/2 zwischen der abbildenden Optik 7 und der Blende 8 angeordnet ist. Der Strahlengang 1 entspricht einer punktförmigen Lichtquelle mit dem Öffnungswinkel α, wie er z. B. an einer Blende 8 entstehen kann.

Wie man erkennt, haben die ausgeblendeten Teilstrahlen z. B. die Randstrahlen 4' und 5', unterschiedliche Ausfallwinkel und divergieren, so daß für die weitere Ausnutzung des Teilstrahls eine zusätzliche Sammellinse erforderlich ist, was einen zusätzlichen Aufwand bedeutet. Außerdem ergeben die unterschiedlichen Ausfallwinkel, daß sich die Teilstrahlen insgesamt nicht mehr fokussieren lassen, was für einige Anwendungsfälle ebenfalls nachteilig ist.

Handelt es sich um polarisiertes Licht, das z. B. horizontal polarisiert ist, so treten bei geringfügigen Änderungen der Polarisationsebene Intensitätsschwankungen im reflektierten Teilstrahl auf (Reflexion gemäß Fresnelscher Formeln), obschon die Intensität des Einfallstrahls unverändert ist. Dies ist ebenfalls nachteilig, da die Intensität des Teilstrahls nicht mehr proportional der Intensität des Hauptstrahls ist, wodurch die Regelung versagt.

2

Bei parallel einfallendem Licht sind die reflektierten Strahlen zwar parallel, aber ebenfalls wird eine Sammellinse benötigt, und bei polarisiertem Licht treten zusätzlich die unerwünschten Intensitätsschwankungen auf.

Figur 2 zeigt schematisch ein Beispiel für eine Menikuslinse mit einem Innenradius $r_1$, einem Außenradius $r_2$ und einer Dicke d, wobei bei der Dimensionierung der Meniskuslinse bezüglich des Innenradius', des Außenradius' und der Dicke ein erheblicher Spielraum besteht, wie aus den später angegebenen Beispielen I bis III hervorgeht.

Figur 3 zeigt den erfindungsgemäßen Strahlteiler, der anstelle der Planplatte der Figur 1 eine Meniskuslinse 6 aufweist, die mit ihrer konkaven Seite 61 der nicht dargestellten Lichtquelle zugewandt ist. Die Meniskuslinse 6 kann gegenüber der optischen Achse im rechten Winkel verschoben, gegenüber der optischen Achse geneigt oder gegenüber der optischen Achse geneigt und verschoben sein. Alle drei Möglichkeiten führen dazu, daß das von der Meniskuslinse reflektierte Bündel mit den Randstrahlen 4' und 5' schräg zum Hauptstrahl austritt und fokussiert ist. Es wird nicht nur das von der Innenfläche reflektierte Bündel ausgenutzt, sondern auch das von der Außenfläche reflektierte Bündel, was hier aus Gründen der Übersichtlichkeit nicht dargestellt wurde. Die Sammellinse entfällt, und, was sich besonders bei polarisiertem Licht mit sich ändernder Polarisationsebene des einfallenden Lichtstrahls günstig auswirkt, ist eine nahezu konstante Intensität des ausgeblendeten Teilstrahls.

Figur 4 zeigt eine weitere Ausführungsform eines erfindungsgemäßen Strahlteilers, bei dem die Meniskuslinse 6 hinter der Abbildenden Optik 7 angeordnet ist. Die konvexe Seite der Meniskuslinse 6 ist der abbildenden Optik 7 und die konkave Seite der Bildebene 9 zugewandt. Es wird z. B. eine Meniskuslinse gewählt, für die folgende Bedingung für Radien gilt :

$$r_2 = r_1 + d$$

Bei diesem Strahlteiler durchläuft der ausgeblendete Teilstrahl die abbildende Optik 7, und die Randstrahlen 4' und 5' sind ähnlich gebündelt wie in Figur 3.

Im folgenden sind einige Beispiele für die Dimensionierung der Meniskuslinse angegeben.

### Beispiel I

Konzentrischer Meniskus

$$1/f = (d/n)[(n - 1)(r_1 \cdot r_2)]$$

mit $d \rightarrow o$ geht $1/f \rightarrow o$ (n = Brechungsindex)

### Beispiel II

Meniskus mit Radiendifferenz

$$r_2 - r_1 = [(n - 1)/n] \cdot d ; 1/f = 0$$

(ergibt afokalen Meniskus)

Es ergibt sich aber eine Winkelvergrößerung mit $\gamma = r_1/r_2$ oder $\gamma = 1 + (d/n)[(n - 1)/r_2]$

### Beispiel III

Höeghsche Linse mit $r_1 = r_2$

$$1/f = d/n[(n - 1)^2/(n \cdot r_1 \cdot r_2)]$$

wobei ebenfalls für $d \rightarrow o$ $f \rightarrow \infty$ geht

Bei dem Beispiel II entsteht zwar ein afokaler Teilstrahl, aber für den Fall von polarisiertem Licht mit schwankender Polarisationsebene tritt keine Intensitätsschwankung im Teilstrahl auf.

Es liegt im Rahmen der Erfindung, auch von den vorgenannten Beispielen abweichende Linsen zu verwenden, wobei es darauf ankommt, daß die Linsen etwa gleiche Innen- und Außenradien haben.

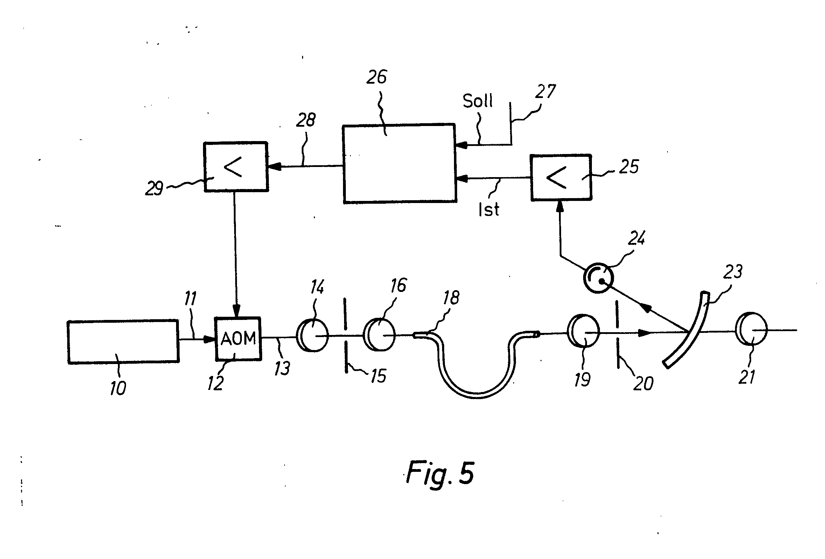

Figur 5 zeigt ein Anwendungsbeispiel der Erfindung für die Konstanthaltung der Intensität eines Lichtstrahls von polarisiertem Licht, dessen Intensität ohne eine Lichtregelung schwanken würde. Eine Lichtquelle 10, z. B. ein Laser, sendet einen Lichtstrahl 11 aus, der auf einen Modulator 12 trifft. Der Ausgangslichtstrahl 13 des Modulators 12 wird über eine erste Linse 14, eine erste Blende 15 und eine zweite Linse 16 auf einen beweglichen Lichtleiter eingekoppelt. Der Ausgang des Lichtleiters 18 wird über eine dritte Linse 19, eine zweite Blende 20 auf ein Objektiv 21 gegeben, an dessen Ausgang Licht konstanter Intensität erscheinen soll. Ohne eine Lichtregelung würden am Ausgang des Objektivs 21 Lichtschwankungen auftreten, die aus termischen Effekten des Modulators, Schwankungen des Lasers und evtl. Modenumwandlungen im Lichtleiter herrühren. Um dies zu verhindern, ist ein geschlossener Regelkreis vorgesehen, wozu zwischen Blende 20 und Objektiv 21 der erfindungsgemäße Strahlteiler 23 gemäß Figur 2 angeordnet ist, dessen Ausgangsstrahl auf einen fotoelektrischen Wandler 24 fällt, der über einen Verstärker 25 an einen Regelverstärker 26 angeschlossen ist. Der Regelverstärker 26 besitzt einen Solleingang 27 und einen Regelausgang 28, der mit einem mit dem Modulator 12 verbundenen Steuergerät 29 verbunden ist. Schwankt die Intensität des Lichtes am Eingang des Strahlteilers, so wird die Schwankung über die geschlossene Regelschleife, Fotowandler 24, Vorverstärker 25, Regelverstärker 26, Modulatorsteuergerät 29 und Modulator 12 ausgeregelt.

Tritt aber zusätzlich eine Veränderung der Polarisationsebene am Ausgang des Lichtleiters durch die Bewegung des Lichtleiters auf, so hat dies keinen Einfluß auf die Intensität des ausgeblendeten Lichtbündels und somit keinen Einfluß auf die Regelung. Bei herkömmlichen Strahlteilern würde im ausgeblendeten Lichtbündel eine Intensitätsänderung auftreten, was zu einer Fehlregelung und damit zu einer schwankenden Intensität des Ausgangslichtstrahls am Objektiv 21 führen würde.

Ein typischer Anwendungsfall für eine stabilisierte Lichtquelle gemäß Figur 5 ist in der Reproduktionstechnik gegeben, und zwar, wenn mit Hilfe eines punktförmigen Lichtstrahls ein optisch-elektrisch abgetastetes Bild auf einem Aufzeichnungsträger wieder aufgezeichnet werden soll. Der Solleingang des Regelverstärkers 26 ist in diesem Falle mit einem von einem optischelektrischen Abtaster gewonnenen Bildsignal beaufschlagt, das der jeweiligen Helligkeit des bei der optisch-elektrischen Abtastung abgetasteten Bildpunktes entspricht. Der Ausgangslichtstrahl des Objektivs 21 entspricht ebenfalls der Helligkeit des bei der fotoelektrischen Abtastung abgetasteten Bildpunktes, und sämtliche zwischen Lichtquelle und Objektiv auftretenden Schwankungen werden durch den im vorangehenden beschriebenen Regelkreis eliminiert. Wird zwischen dem aus dem Objektiv austretenden Lichtstrahl und dem Aufzeichnungsträger die gleiche Relativbewegung durchgeführt, wie sie bei der fotoelektrischen Abtastung des Originalbildes erfolgt, so erhält man auf dem Aufzeichnungsmedium eine Reproduktion des Originals. Da das Auge auf Intensitätsschwankungen des Aufzeichnungslichtstrahls, die nicht dem Bildoriginal entsprechen, besonders empfindlich reagiert, kann mit der in Figur 5 dargestellten Anordnung eine äußerst hohe Bildqualität erreicht werden. Die Anwendung des erfindungsgemäßen Strahlteilers ist nicht auf dieses Anwendungsbeispiel beschränkt, sondern ist überall dort von Vorteil, wo es bei der Strahlteilung auf einen geringen Aufwand, auf einen symmetrischen Teilstrahl und auf einen Teilstrahl konstanter Intensität bei evtl. Schwankungen der Polarisationsebene der Lichtquelle ankommt.

## Ansprüche

1. Optischer Strahlteiler mit einem im Strahlengang angeordneten, reflektierenden optischen Element, dadurch gekennzeichnet, daß das optische Element eine im wesentlichen afokale Meniskuslinse (6) ist, die gegenüber dem Strahlengang geneigt angeordnet ist.

2. Optischer Strahlteiler nach Anspruch 1, dadurch gekennzeichnet, daß die Meniskuslinse (6) geneigt so hinter einer die Abbildung des Hauptstrahlenganges bewirkenden Linse (7) angeordnet ist, daß der Ursprungspunkt ihrer Radien ($r_1$, $r_2$) im wesentlichen in der Bildebene (9) liegt (Fig. 4).

3. Intensitätsgeregelte Lichtquelle mit einem im Strahlengang hinter der Lichtquelle (10) angeordneten Strahlteiler, einem von dem vom Strahlteiler ausgeblendeten Teilstrahl beaufschlagbaren optisch-elektrischen Wandler (24) und einem mit dem optisch-elektrischen Wandler (24) und der modulierbaren Lichtquelle (10, 12) verbundenen Regelverstärker (26), gekennzeichnet durch die Verwendung eines Strahlteilers (23) gemäß Anspruch 1.

4. Intensitätsgeregelte Lichtquelle mit einem im Strahlengang hinter der Lichtquelle (10) angeordneten Strahlteiler, einem von dem vom Strahlteiler ausgeblendeten Teilstrahl beaufschlagbaren optisch-elektrischen Wandler (24), einem der Lichtquelle (10) nachgeschalteten elektrisch beeinflußbaren optischen Stellglied (12) (Figur 5) und einem mit dem optisch-elektrischen Wandler (24) und dem Stellglied (12) verbundenen Regelverstärker (26), gekennzeichnet durch die Verwendung eines Strahlleiters (23) gemäß Anspruch 1.

## Claims

1. Optical beam splitter comprising a reflective optical element situated in the beam path, characterized in that the optical element is a substantially afocal meniscus lens (6) which is set at an angle to the beam path.

2. Optical beam splitter according to claim 1, characterized in that the meniscus lens (6) is arranged at a slope behind a lens (7) causing the image of a principal beam path to be formed, in such manner that the point of origin of its radii ($r_1$, $r_2$) is situated (Fig. 4) substantially in the image plane (9).

3. Light source of controlled intensity, comprising a beam splitter situated in the beam path behind the light source (10), an opto-electronic transducer (24) which may be acted upon a partial beam splitted off from the beam splitter, and a variable-gain amplifier (26) connected to the opto-electronic transducer (24) and to the light source (10, 12) to be modulated, characterized by the application of a beam splitter (23) according to claim 1.

4. Light source of controlled intensity, comprising a beam splitter situated in the beam path behind the light source (10), an opto-electronic transducer (24) which may be acted upon by a partial beam splitted off from the beam splitter, an optical adjusting element (12) situated behind the light source (10) and apt to be acted upon electrically (Figure 5), and a variable-gain amplifier (26) connected to the optical-electric transducer (24) and to the adjusting element (12), characterized by the application of a beam splitter (23) according to claim 1.

## Revendications

1. Diviseur optique de faisceau avec un élément optique réfléchissant disposé sur le trajet du faisceau, caractérisé en ce que l'élément optique est essentiellement une lentille afocale en forme de ménisque (6) disposée obliquement par rapport au trajet du faisceau.

2. Diviseur optique de faisceau selon la revendication 1, caractérisé en ce que la lentille en forme de ménisque (6) ainsi inclinée, est disposée derrière une lentille (7) assurant la concentration du faisceau principal, de sorte que le point d'origine des rayons ($r_1$, $r_2$) de cette lentille se situe essentiellement dans le plan d'image (9) (figure 4).

3. Source de lumière réglée en intensité avec un diviseur de faisceau disposé sur le trajet du faisceau en aval de la source de lumière (10), un convertisseur optique-électrique (24) susceptible de recevoir le faisceau partiel extrait par le diviseur de faisceau, et un amplificateur de régulation (26) relié au convertisseur optique-électrique (24) et à la source de lumière modulable (10, 12) source de lumière caractérisée par la mise en œuvre d'un diviseur de faisceau (23) selon la revendication 1.

4. Source de lumière réglée en intensité avec un diviseur de faisceau disposé sur le trajet du faisceau en aval de la source de lumière (10), un convertisseur optique-électrique (24) susceptible de recevoir le faisceau partiel extrait par le diviseur de faisceau, un organe de réglage optique (12) (figure 5) susceptible d'être influencé électriquement et branché à la suite de la source de lumière (10), et un amplificateur de régulation (26) relié au convertisseur optique électrique (24) et l'organe de réglage (12), source de lumière caractérisée par l'utilisation d'un diviseur de faisceau (23) selon la revendication 1.

Fig.1

Fig.2

Fig. 3

Fig. 4

1

Fig. 5